(19) Europäisches Patentamt
European Patent Office
Office européen des brevets

(11) Veröffentlichungsnummer: **0 043 036**
**B1**

(12) # EUROPÄISCHE PATENTSCHRIFT

(45) Veröffentlichungstag der Patentschrift: **29.06.83**

(51) Int. Cl.³: **C 09 D 3/52,** C 09 D 3/66, C 08 L 61/24

(21) Anmeldenummer: **81104682.0**

(22) Anmeldetag: **19.06.81**

(54) **Verfahren zur Reduzierung der Formaldehydemission bei säurehärtenden Lacken auf Basis von Alkyd-Harnstoffharz-Kombinationen.**

(30) Priorität: **02.07.80 AT 3444/80**

(43) Veröffentlichungstag der Anmeldung: **06.01.82 Patentblatt 82/1**

(45) Bekanntmachung des Hinweises auf die Patenterteilung: **29.06.83 Patentblatt 83/26**

(84) Benannte Vertragsstaaten: **CH DE FR GB IT LI NL SE**

(56) Entgegenhaltungen:
**DE-A-1 519 319**
**DE-A-1 594 916**
**DE-A-1 594 948**
**US-A-3 547 846**

(73) Patentinhaber: **Vianova Kunstharz Aktiengesellschaft, A-8402 Werndorf (AT)**

(72) Erfinder: **Zückert, Bertram, Dr., Krottendorferstrasse 90/19, A-8052 Graz (AT)**
Erfinder: **Kolleritsch, Karl, Dr., Johann Straussgasse 3, A-8010 Graz (AT)**

(74) Vertreter: **Pitter, Robert, Dr. et al, Postfach 191 Leechgasse 21, A-8011 Graz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Verfahren zur Reduzierung der Formaldehydemission bei säurehärtenden Lacken auf Basis von Alkyd-Harnstoffharz-Kombinationen

Die vorliegende Erfindung betrifft ein Verfahren zur Reduzierung der Formaldehydemission bei säurehärtenden Lacken auf Basis von Alkyd-Harnstoffharz-Kombinationen.

Wie bekannt, werden säurehärtende Alkyd-Harnstoffharz-Kombinationen in grossem Umfang für die Holzlackierung, z.B. für Möbel oder zur Versiegelung von Parkettböden eingesetzt. Ihre Vorteile liegen in der raschen Trocknung und der guten mechanischen und chemischen Beständigkeit der aufgebrachten Lackfilme.

Ein wesentlicher Nachteil dieser Bindemittelklasse liegt in der Geruchsbelästigung, der der Verarbeiter durch die Formaldehydemission aus dem nassen Lackfilm ausgesetzt ist. Formaldehyd macht sich schon in geringen Konzentrationen durch seinen stechenden Geruch bemerkbar und ist überdies stark toxisch (MAK-Wert: 1 ppm).

Aus der Literatur sind viele Versuche bekannt, diesen Mangel zu beheben:

So wurde einerseits versucht, durch Nachbehandlung der Harnstoffharze mit formaldehydreaktiven Chemikalien, wie Natriumhydrogensulfit, Wasserstoffperoxid oder Ammoniak diesen Mangel zu beheben (GB-A 1 116 087, DE-A 15 95 204 und DE-A 15 95 206). Andererseits wurde versucht, den Gehalt an freiem Formaldehyd in den Harnstoffharzen durch Destillation abzusenken (DE-A 15 95 205 und 15 95 224).

Diese Massnahmen bleiben jedoch ohne nachhaltigen Erfolg, da damit der Gehalt an freiem Formaldehyd nur vorübergehend gesenkt werden kann und sich durch Gleichgewichtseinstellung bald wieder auf den ursprünglichen Wert erhöht. Ausserdem haben Versuche ergeben, dass auch Harze mit sehr geringem Gehalt von freiem Formaldehyd bei der Verfilmung eine starke Formaldehydemission aufweisen. Es kann daraus geschlossen werden, dass sich ein grosser Anteil des emittierten Formaldehydes erst während der Verfilmung bildet.

Aufgrund dieser Erkenntnis wird daher in der Literatur vorgeschlagen, den in situ gebildeten Formaldehyd durch Zusatz von «Formaldehydfängern» unschädlich zu machen. So wird in der DE-B 26 17 232 der Zusatz von Harnstoff, in der JA-KOKAN 74 42 737 der Zusatz von Harnstoff bzw. Thioharnstoff empfohlen. Tatsächlich kann damit eine wesentliche Verringerung der Geruchsbelästigung bei der Aushärtung der Lacke erreicht werden. Die Anwendung dieser Methode ist jedoch mit dem wesentlichen Nachteil behaftet, dass der zugesetzte Harnstoff in der Alkyd-Harnstoffharz-Kombination nur schwer löslich ist, so dass die Mischung erwärmt werden muss. Eine Zugabe direkt vor der Lackanwendung ist daher praktisch nicht durchführbar. Bei Lagerung der mit Harnstoff versetzten Lacke, reagiert dieser im Sinne des chemischen Gleichgewichtes unter Bildung von unlöslichen Dimethylolharnstoff. Das macht sich einerseits durch eine Trübung und Verminderung des Glanzes des Lackes und andererseits durch ein langsames Abklingen der beabsichtigten Wirkung bemerkbar.

Thioharnstoff ist besser löslich und bildet auch keine unlöslichen Methylolverbindungen. Der Einsatz von Thioharnstoff kommt aber deshalb nicht in Frage, da er zu den cancerogenen Stoffen gezählt wird.

Es wurde nun gefunden, dass die Formaldehydemission bei der Verarbeitung von Alkyd-Harnstoffharz-Kombinationen wesentlich herabgesetzt werden kann, wenn dem Lack Äthylenharnstoff (Imidazolidin-2-on:

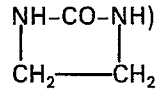

zugesetzt wird. Diese Substanz ist als solche, wie auch in Form ihrer Methylolverbindungen, gut in den Harzkombinationen löslich und zeigt innerhalb der beanspruchten Grenzen keine negativen Auswirkungen auf den Lack bzw. die daraus hergestellten Lackierungen.

Die vorliegende Erfindung betrifft demgemäss ein Verfahren zur Verminderung der Formaldehydemission bei säurehärtenden Lacken auf Basis von Alkyd-Harnstoffharz-Kombinationen, welches dadurch gekennzeichnet ist, dass man dem Lack vor der Verarbeitung, vorzugsweise gleichzeitig mit dem Säurekatalysator 1 bis 6 Gew.-% (bezogen auf Festharz) Äthylenharnstoff (Imidazolidin-2-on), vorzugsweise in verdünnter Lösung, zusetzt.

Die Zugabe des Äthylenharnstoffes erfolgt vorteilhafter Weise in Form einer max. 30 Gew.-%igen Lösung in Äthanol oder einem anderen für das Lacksystem geeigneten Lösungsmittel für die Substanz.

Die Zusammensetzung säurehärtender Lacke auf der Basis von Alkyd-Harnstoffharz-Kombinationen sowie der Aufbau der Komponenten für solche Kombinationen sind dem Fachmann bekannt und brauchen daher an dieser Stelle nicht mehr beschrieben werden.

Im folgenden Beispiel wird eine handelsübliche Alkyd-Harnstoffharz-Kombination eingesetzt, welche vom Hersteller wie folgt definiert wird:

Säurehärtbares, plastifiziertes Harnstoffharz zur Herstellung von Ein- oder Zweikomponentenlacken zur industriellen Oberflächenveredelung von Holz und Holzwerkstoffen. Lieferform: 60%ig in Äthanol/Butanol; Viskosität: 200-280 s (DIN 53 211/20°C); Säurezahl: unter 8 mg KOH/g; Typenbezeichnung: VIAMIN® HP 364; Hersteller: Vianova Kunstharz AG, Wien.

Die Formaldehydemission wird nach folgender Methode bestimmt: Der zu untersuchende Lack wird mittels Aufziehgerät auf eine gewogene Glasplatte mit einer Nassfilmstärke von 120 µm aufgebracht und die Glasplatte sofort in ein geschlossenes Glasgefäss mit den Abmessungen

22 × 12 × 6 cm gebracht, durch welches pro Minute 100 ml Luft strömt, die in einer Vorlage durch eine 0,1%ige Lösung von 2-Hydrazono-2,3-dihydro-3-methylbenzothiazol-hydrochlorid durchgeleitet wird. Die Bestimmung des Formaldehyds erfolgt photometrisch nach Zusatz von 10%iger Eisen(III)chloridlösung. Die Methode wird im «Handbuch der photometrischen Analyse organischer Verbindungen» von B. Kakac und Z. Vejdelek, Verlag Chemie, ausführlich beschrieben. Durch halbstündliche Messungen erhält man ein zeitabhängiges Mengendiagramm. Der Messzyklus wird nach ca. 24 Stunden beendet. Anschliessend wird die Lackmenge durch Rückwägung festgestellt. Diese Menge dient als Bezugspunkt für die Erstellung der Emissionskurve.

Geprüft wurde ein Lack auf Basis der obengenannten Harzkombination, welche wie folgt zusammengesetzt war:

| | | |
|---|---|---|
| Lack A: a) | 92,- Gew.-Teile | Harz (60%ig) = (55,2 Tle Festharz) |
| | 4,- Gew.-Teile | Xylol |
| | 2,- Gew.-Teile | Äthylglykolacetat |
| | 2,- Gew.-Teile | Butylacetat |
| | 100,- | |
| b) | 10,- Gew.-Teile | p-Tuluolsulfonsäure-Lösung (10%ig in Äthanol) |

Lack B:
Dem obengenannten Lackansatz (a) wurde als Teil (b) eine Mischung aus

| | |
|---|---|
| 10,- Gew.-Teilen | p-Toluolsulfonsäure-Lösung (10%ig in Äthanol) |
| 8,83 Gew.-Teilen | Äthylenharnstoff-Lösung (25%ig in Äthanol) |

zugesetzt. Die Menge des Äthylenharnstoffs entspricht 4% Festsubstanz auf eingesetztes Festharz.

Die Lacke wurden entsprechend der oben angegebenen Vorschrift untersucht und ergaben die folgenden Werte für die Formaldehydemission.

| Zeit Stunden | Formaldehydemission *) Lack A | Lack B |
|---|---|---|
| 0,5 | 500 | 400 |
| 1,0 | 1500 | 800 |
| 1,5 | 2400 | 1200 |
| 2,0 | 3200 | 1550 |
| 2,5 | 3750 | 1800 |
| 3,0 | 4200 | 2050 |
| 3,5 | 4550 | 2250 |
| 4,0 | 4900 | 2400 |
| 4,5 | 5200 | 2500 |
| 5,0 | 5400 | 2650 |
| 6,0 | 5700 | 2800 |
| 7,0 | 6000 | 2900 |
| 8,0 | 6200 | 3000 |
| 9,0 | 6350 | 3050 |
| 12,0 | 6600 | 3150 |
| 24,0 | 6700 | 3250 |

*) Mikrogramm/Gramm Trockenfilm

Wie sich aus der Tabelle ergibt, wird die Formaldehydemission durch das erfindungsgemässe Verfahren um mehr als 50% reduziert. Wie sich aus der nachfolgenden Zusammenstellung ergibt, werden die lacktechnischen Eigenschaften durch den Zusatz nicht beeinflusst.

| Prüfung | Methode | Lack A | Lack B |
|---|---|---|---|
| Trocknung | (1) | 8/10/20 | 7/10/20 |
| Pendelhärte | (2) | | |
| nach 3 h | | 54/114 | 64/135 |
| nach 6 h | | 89/128 | 105/135 |
| nach 24 h | | 126/148 | 128/158 |
| Topfzeit | (3) | 60 | 51 |
| Stapeltest 7 Monate | (4) | keine | Risse |

Prüfmethoden und Auswertung

1. Messung der Trocknungszeit am «Drying Recorder» Nassfilmstärke 152 μm, Laufzeit 6;

a/b/c a = Verlaufzeit
b = Antrocknung
c = Durchtrocknung

Angaben in Minuten.

2. Gemessen nach DIN 53 157 bei 120 und 300 μm Nassfilm.

3. Stunden bei 25°C bis zur beginnenden Gelierung.

4. 20 lackierte Bretter werden gestapelt und bei Zimmertemperatur gelagert. Die Lackierungen werden monatlich auf Rissbildung untersucht.

Bei Äthylenharnstoffmengen über 10 Gew.-% tritt nach dieser Zeit bereits deutliche Rissbildung auf.

**Patentansprüche**

1. Verfahren zur Verminderung der Formaldehydemission bei säurehärtenden Lacken auf Basis von Alkyd-Harnstoffharz-Kombinationen, dadurch gekennzeichnet, dass man dem Lack vor der Verarbeitung, vorzugsweise gleichzeitig mit dem Säurekatalysator, 1 bis 6 Gew.-% (bezogen auf den Festharzanteil) Äthylenharnstoff (Imidazolidin-2-on), vorzugsweise in Lösung, zusetzt.

2. Verfahren nach Anspruch 1, dadurch gekennzeichnet, dass der Äthylenharnstoff in Form

einer 10 bis 30 Gew.-%igen äthanolischen Lösung zugesetzt wird.

**Revendications**

1. Procédé de réduction de l'émission de formaldéhyde pour des peintures durcissables par un acide à base d'un mélange d'une résine alkyde et d'une résine uréeformaldéhyde, caractérisé en ce qu'on ajoute à la peinture, avant la mise en œuvre, de préférence en même temps que le catalyseur acid, 1 à 6% en poids (par rapport à la fraction de résine solide) d'éthylène-urée (imidazolidine-2-one), de préférence en solution.

2. Procédé suivant la revendication 1, caractérisé en ce que l'éthylène-urée est ajoutée sous la forme d'une solution éthanolique à 10 à 30% en poids.

**Claims**

1. Process for reducing the formaldehyde emission in acidcurable paints based on combinations of an alkyd resin and a urea resin, characterised in that, prior to the application of the paint, 1 to 6% by weight (calculated on resin solids) of ethylene urea (imidazolidine-2-on), preferably as a solution, are added, preferably simultaneously with the acid catalyst.

2. Process according to claim 1, characterised in that ethylene urea is added as a 10 to 30% by weight solution in ethanol.